# EUROPÄISCHE PATENTSCHRIFT

(11) **EP 0 499 163 B1**
(45) Veröffentlichungstag und Bekanntmachung des Hinweises auf die Patenterteilung: **27.10.1993**
(21) Anmeldenummer: 92102117.6
(22) Anmeldetag: 08.02.1992
(51) Int. Cl.: F16D 3/06, F16D 25/12, F16L 27/08

(54) **Getriebekomponente mit Keilverzahnung**
Transmission component with splines
Composant de transmission avec cannelures

(30) Priorität: 14.02.1991 US 655617
(43) Veröffentlichungstag der Anmeldung: 19.08.1992
(73) Patentinhaber: DEERE & COMPANY, Moline, Illinois 61265 (US)
(72) Erfinder: Johnson, Douglas Rene, Waterloo, Iowa 50701 (US)
(74) Vertreter: Feldmann, Bernhard

(56) Entgegenhaltungen:
- DE-A- 3 903 253

## Beschreibung

Die Erfindung betrifft eine Getriebekomponente mit einem ersten Teil, welches über wenigstens eine Keilverzahnung drehfest auf einer Welle gelagert ist, wobei in dem ersten Teil ein Kanal verläuft, der sich zu einer der Welle zugewandten Oberfläche des ersten Teils öffnet und der einem sich zur Oberfläche der Welle öffnenden Kanal der Welle gegenüberliegt.

Auf Getriebewellen sind häufig Kupplungstrommeln befestigt, wobei ein in der Welle verlaufender Ölkanal mit der Kupplung in Verbindung steht, um Drucköl an den Kupplungsbetätigungskolben zu leiten. Hierbei ist es erforderlich, daß zwischen Kupplungstrommel und Welle eine Dichtung vorgesehen ist, so daß kein Öl aus dem Ölkanal entweichen kann. Sind mehrere Kupplungen auf einer Welle befestigt, deren Ölzufuhr durch die Welle erfolgt, so ist die Abdichtung mehrerer Ölkanäle erforderlich, was erhebliche konstruktive Probleme aufwerfen kann. Gleichzeitig muß jede der Kupplungstrommeln so auf der Welle befestigt sein, daß die Übertragung der erforderlichen Drehmomente zwischen Welle und Kupplungstrommel gewährleistet ist.

Durch die US-A-2,511,520 ist eine auf einer Welle angeordnete Kupplung beschrieben, bei der eine Kupplungsnabe konzentrisch zu einer Welle angeordnet ist. Die Drehmomentenübertragung erfolgt über einen Keil, der in Nuten in der Welle und der Kupplungsnabe eingelegt ist. Durch die Welle und die Kupplungsnabe verläuft ein Kanal. Die Abdichtung des Kanals an der Übergangsstelle zwischen Welle und Kupplungsnabe erfolgt durch einen Dichtring, der sich im Kanalabschnitt der Kupplungsnabe befindet und durch einen in den Kanalabschnitt einschraubbaren Einsatz gegen die Welle gepreßt wird. Diese Abdichtung ist relativ aufwendig. Ferner ist durch die begrenzte Belastbarkeit des in die Nuten eingelegten Keils und die Spannungsanhäufung in der Welle das übertragbare Drehmoment begrenzt.

Eine weitere Möglichkeit, den Kanal zwischen der Welle und der Kupplungstrommel abzudichten, ist durch die Verwendung eines Preßsitzes zwischen Welle und Kupplungstrommel gegeben. Aus Fertigungsgründen muß jedoch auch hierbei ein Keil zur Übertragung des Drehmomentes mit der bereits beschriebenen Begrenzung der Drehmomentübertragung eingesetzt werden.

Es könnte auch daran gedacht werden, die Kupplungstrommel und die Welle aus einem einzigen Schmiedestück zu fertigen oder die Teile miteinander zu verschweißen. Dieses Verfahren ist jedoch sehr teuer und begrenzt wegen der Montierbarkeit die Anzahl der auf der Welle anordenbaren Kupplungen.

Die der Erfindung zugrunde liegende Aufgabe wird darin gesehen, eine Getriebekomponente der eingangs genannten Art anzugeben, bei der eine Kupplungstrommel oder ein anderes ähnliches Teil durch Keilverzahnungen auf einer Welle befestigt ist und ein zwischen beiden verlaufender Kanal, beispielsweise ein Ölkanal, zuverlässig abgedichtet werden soll, wobei ausreichend hohe Drehmomente übertragbar sind. Die Anordnung soll kostengünstig herstellbar sein und eine einfache Montage ermöglichen.

Die Aufgabe wird ausgehend von dem Oberbegriff des Patentanspruches 1 durch dessen kennzeichnende Merkmale gelöst. Weitere vorteilhafte Ausgestaltungen der Erfindung gehen aus den Unteransprüchen hervor. Auch wenn im folgenden die Erfindung anhand einer Kupplungstrommel beschrieben wird, so kann an die Stelle dieser Kupplungstrommel auch ein anderes auf einer Welle oder dergleichen montiertes Teil treten.

Die Welle und die Kupplungstrommel werden gemäß der Erfindung durch eine Keilverzahnung mit im Querschnitt zueinander schräg verlaufenden Zahnflanken miteinander verbunden. Dabei wird absichtlich die Ausbildung, die Zahl und die Verteilung der Keilverzahnungen so gewählt, daß ein zwischen Welle und Kupplungstrommel wirkendes Drehmoment eine resultierende radiale Kraftkomponente hervorruft. Diese Kraftkomponente preßt die Oberfläche, die den Öffnungsbereich des Wellenkanals umgibt, auf die Oberfläche, die den Öffnungsbereich des Kupplungskanals umgibt, dichtend aufeinander.

Wird ein Drehmoment zwischen Welle und Kupplungstrommel durch die Keilverzahnungen übertragen, so wird durch die abgewinkelten Flanken der Verzahnungen die Kraft in eine radiale Komponente und eine in Umfangsrichtung weisende Komponente, die der Drehmomentübertragung dient, zerlegt. Bei einer bisher üblichen Konstruktion wurde sichergestellt, daß sich die radialen Kraftkomponenten der einzelnen Verzahnungen gegenseitig aufheben. Die vorliegende Erfindung geht einen anderen Weg, bei dem absichtlich eine resultierende radiale Kraftkomponente erzeugt wird, die zur Erzeugung eines Dichtungsdruckes herangezogen wird. Die resultierende radiale Kraftkomponente kann beispielsweise durch eine unsymmetrische Verteilung der Keilverzahnungen oder durch Weglassen von Zähnen der Keilverzahnungen erreicht werden.

Entsprechend der Erfindung wird durch die resultierende radiale Kraftkomponente die Kupplungstrommel mit ihrer Stelle, die in der Nähe des Ölkanalaustrittes liegt, eng gegen die Welle gedrückt, um den Ölkanal abzudichten. Die Keilverzahnungen sind dabei jedoch so auslegbar, daß sie genügend hohe Drehmomente übertragen können.

Vorzugsweise sind symmetrisch auf dem Umfang der Welle Keilnuten verteilt. Dies ermöglicht es, daß auch andere Bauelemente, beispielsweise Zahnräder oder Lager, die mit passenden symmetrisch verteilten Keilzähnen versehen sind, auf der Welle drehfest befestigbar sind, wobei sich jedoch die an den einzelnen Keilverzahnungen auftretenden radialen Kräfte gegenseitig aufheben. Bei der Kupplungstrommel können jedoch einzelne Keilzähne weggelassen werden, so daß sich keine symmetrische Zahnverteilung ergibt und sich eine resultierende radiale Kraftkomponente einstellt. Vorzugsweise werden bei der Kupplungstrommel Keilzähne weggelassen, die beidseits des Ölkanals liegen.

Die erfindungsgemäße Anordnung hat mehrere Vorteile. Die Welle läßt sich mechanisch drehen oder unter Verwendung eines üblichen Fräsverfahrens herstellen. Die Bohrung der zugehörigen Kupplungstrommel kann mit üblichen Verfahren ausgeräumt oder durch Stoßen herausgearbeitet werden.

Die beschriebene Verbindung durch Keilverzahnung ist kostengünstig herstellbar, leicht zu montieren und für die Übertragung großer Drehmomente geeignet. Die gleichen Keilnuten können für die Montage mehrerer Kupplungstrommeln und Zahnräder verwendet werden, wodurch sich die Herstellung und die Montage vereinfachen lassen. Falls gewünscht, kann eine enge Toleranz des äußeren Durchmessers einer oder mehrerer Keilverzahnungen ausgenutzt werden, um eine genaue Lagetoleranz zu erhalten.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den Längsschnitt durch einen Teil einer erfindungsgemäßen Getriebekomponente, welche eine Welle und eine Kupplungstrommel enthält und
- Fig. 2: einen Querschnitt entlang der Linie 2 - 2 gemäß Fig. 1.

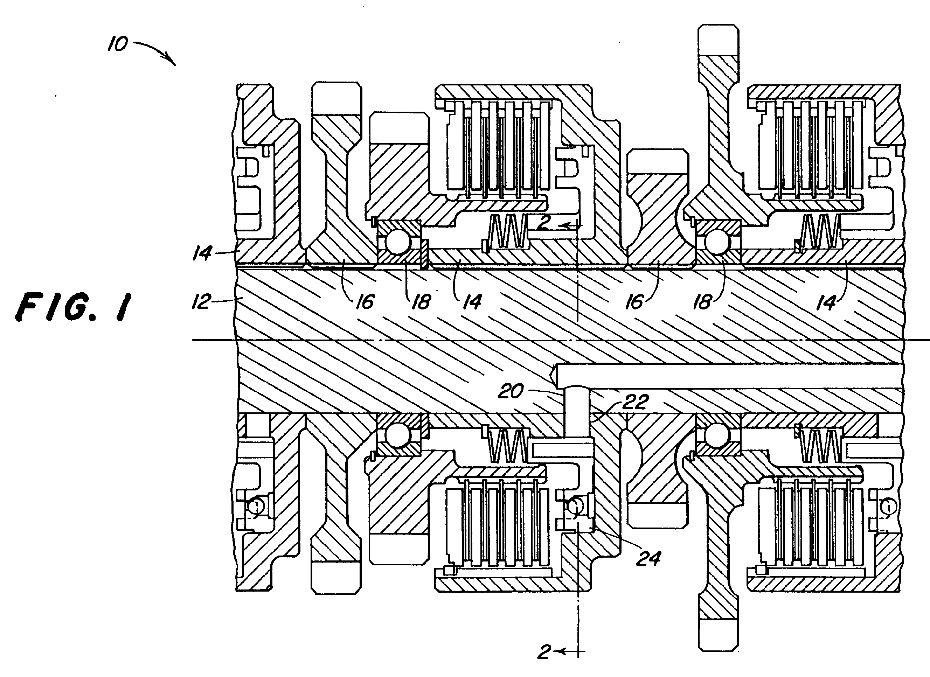

Das in Fig. 1 dargestellte Getriebeteil 10 enthält eine Welle 12, die mehrere Kupplungstrommeln 14, Zahnräder 16 und Lagerungen 18 trägt. Über einen Ölkanal 20 in der Welle 12 und einen hiermit in Verbindung stehenden Ölkanal 22 einer der Kupplungstrommeln 14 kann Öl für die Betätigung eines Kupplungskolbens 24 geleitet werden. Entsprechende Kanäle können auch für die andere dargestellte Kupplung vorgesehen sein. Sie wurden in der Zeichnung jedoch der besseren Übersichtlichkeit halber weggelassen.

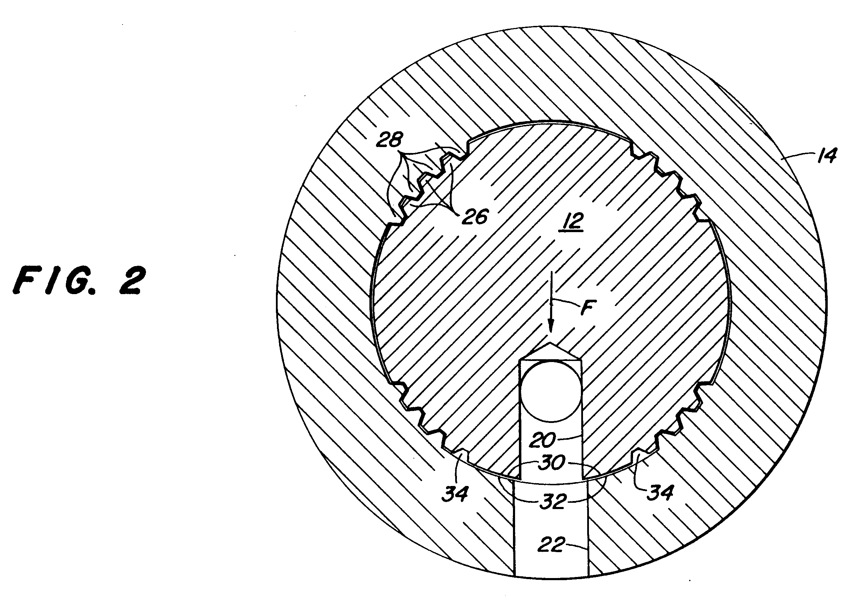

In Fig. 2 ist ein Querschnitt durch die Welle 12 und durch eine Kupplungstrommel 14 dargestellt. Wie ersichtlich, sind auf der Welle 12 eine Vielzahl auf ihrem Umfang verteilte Gruppen von Keilzähnen 26 angeordnet, die mit entsprechenden in die innere Oberfläche der Kupplungstrommel 14 eingelassenen Keilnuten 28 in Eingriff stehen. Die in Umfangsrichtung weisenden Seitenflächen jedes Keilzahnes 26 und jeder Keilnut 28 sind zueinander keilförmig ausgerichtet, so daß eine zwischen den Keilzähnen 26 und den Keilnuten 28 wirkende Verdrehungskraft wenigstens teilweise in eine radiale Kraftkomponente umgesetzt wird.

Gemäß der vorliegenden Erfindung heben sich die auf den Umfang verteilten radialen Kräfte nicht gegenseitig auf. Vielmehr ergibt sich eine resultierende radial auf die Welle 12 wirkende Kraftkomponente, die in Richtung des Pfeiles F weist, oder entsprechend eine resultierende radiale auf die Kupplungstrommel 14 wirkende Kraftkomponente, die entgegen der Richtung des Pfeiles F wirkt. Infolge dieser Kräfte werden die Oberfläche 30 der Welle 12 und die Oberfläche 32 der Kupplungstrommel 14 im Bereich der jeweiligen Austrittsöffnung der Ölkanäle 20, 22 eng aufeinander gepreßt, so daß die beiden sich gegenüberstehenden Ölkanäle 20 und 22 gegeneinander abgedichtet werden. Der Anteil der Verdrehkraft, der nicht in eine radiale Kraftkomponente umgesetzt wird, wird durch die Keilzähne 26 und die Keilnuten 28 zur Übertragung von Drehmomenten zwischen der Welle 12 und der Kupplungstrommel 14 genutzt.

Es gibt viele Möglichkeiten, ein Ungleichgewicht der radialen, durch die Keilverzahnungen 26, 28 zerlegten Kräfte zu erzeugen. Theoretisch genügt hierfür ein einzelner Keilzahn mit in Umfangsrichtung schräg ausgebildeten Flanken, der in eine entsprechende Keilnut eingreift, wobei sich der Keilzahn und die Keilnut in etwa gegenüber den Öffnungen der abzudichtenden Ölkanäle befinden. Eine derartige Ausbildung dürfte jedoch in vielen Anwendungsfällen wegen zu hoher Scherkräfte nicht zu dem gewünschten Ergebnis führen. Meist wird es zweckmäßiger sein, eine ungleiche Anzahl von Keilverzahnungen auf den sich hinsichtlich der Ölkanäle gegenüberliegenden Seiten der Welle zu verwenden. Dies kann dadurch erreicht werden, daß eine unterschiedliche Anzahl von Verzahnungen (Zähnen und Nuten) in die Oberflächen eingearbeitet werden, oder daß von einer der beteiligten Komponenten ein oder mehrere Keilzähne weggelassen werden. In dem dargestellten Ausführungsbeispiel wurde auf jeder Seite des Ölkanals 22 der Kupplungstrommel 14 ein Keilzahn weggelassen. Die Leerstellen wurden durch das Bezugszeichen 34 gekennzeichnet.

Das Weglassen von Keilzähnen ist gegenüber einer ungleichmäßig auf den Umfang verteilten Zahl von Keilverzahnungen vorteilhaft, da die Keilnuten der Welle 12 dann auch dazu verwendbar sind, verschiedene Zahnräder 16 und Lagerungen 18 auf der Welle 12 zu befestigen, für die keine resultierende radiale Kraftkomponente erwünscht ist. Diese Komponenten 16, 18 könnten dann einfach auch die Keilzähne aufweisen, die bei der Kupplungstrommel weggelassen wurden, so daß bei ihnen die radialen Kräfte ausgeglichen sind und sich gegenseitig aufheben.

Ein weiterer Vorteil beim Weglassen von Keilverzahnungen ist darin zu sehen, daß bei verschiedenen auf der Welle gelagerten Kupplungstrommeln deren Ölkanäle sich an verschiedenen Umfangspositionen der Welle 12 befinden können. Die Kräfte werden in diesem Fall in die gewünschten Richtungen dadurch zerlegt, daß an den entsprechenden Seiten der Kupplungstrommeln Zähne weggelassen werden.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

So wurde die Anzahl der Keilverzahnungen und ihre Anordnung in der Zeichnung lediglich exemplarisch dargestellt. Es kann eine beliebige Anzahl von Keilverzahnungen und eine beliebige Anordnung gewählt werden, vorausgesetzt, daß sich die erforderliche resultierende radiale Kraftkomponente einstellt. Allerdings sollte beachtet werden, daß das Kräfteungleichgewicht nicht so groß wird, daß die Komponenten beschädigt werden könnten. Soll beispielsweise lediglich ein geringes Drehmoment übertragen werden, so hat es sich als vorteilhaft herausgestellt, lediglich drei Gruppen von Keilverzahnungen an Stelle der vier in der Fig. 2 dargestellten Gruppen zu verwenden. Auch wenn alle Keilverzahnungen der Fig. 2 Querschnitte mit zueinander abgewinkelten Flanken aufweisen, so ist dies nicht notwendig. Einige der Keilverzahnungen können auch gerade Seitenflächen aufweisen, solange nur genügend Keilverzahnungen mit abgewinkelten Seitenflanken vorhanden sind, um die erforderliche resultierende radiale Kraftkomponente zu erzeugen. Auch können einige oder alle der Keilverzahnungen evolventisch ausgebildet sein.

Auch wenn die Erfindung in Verbindung mit einer Kupplungstrommel beschrieben wurde, so kann die gleiche Technik auch dazu verwendet werden, eine Dichtung für andere Anwendungsfälle, bei denen eine Ölverbindung zwischen aneinander angrenzenden Komponenten vorliegt, zu liefern.

## Patentansprüche

1. Getriebekomponente mit einem ersten Teil (14), welches über wenigstens eine Keilverzahnung (26, 28) drehfest auf einer Welle (12) gelagert ist, wobei in dem ersten Teil (14) ein Kanal (22) verläuft, der sich zu einer der Welle (12) zugewandten Oberfläche (32) des ersten Teils (14) öffnet und dem ein sich zur Oberfläche (30) der Welle (12) öffnender Kanal (20) der Welle (12) gegenüberliegt, dadurch gekennzeichnet, daß die Ausbildung, die Zahl und die Verteilung der Keilverzahnungen (26, 28) so gewählt ist, daß ein zwischen Welle (12) und erstem Teil (14) wirkendes Drehmoment eine resultierende radiale Kraftkomponente hervorruft, durch die die Oberfläche (30), die den Öffnungsbereich des Wellenkanals (20) umgibt, auf die Oberfläche (32), die den Öffnungsbereich des Kanals (22) des ersten Teils (14) umgibt, dichtend aufeinander gepreßt werden.

2. Getriebekomponente nach Anspruch 1, dadurch gekennzeichnet, daß wenigstens eine der Keilverzahnungen (26, 28) wenigstens eine Flanke aufweist, die schräg zum Radiusvektor ausgerichtet ist.

3. Getriebekomponente nach Anspruch 1 oder 2, dadurch gekennzeichnet, daß die in Umfangsrichtung weisenden Seitenflächen wenigstens einer Keilverzahnung (26, 28) zueinander keilförmig ausgerichtet sind.

4. Getriebekomponente nach einem der Ansprüche 1 bis 3, dadurch gekennzeichnet, daß die Keilverzahnungen (26, 28) symmetrisch auf der Wellenoberfläche verteilt angeordnet sind und daß wenigstens einer der Keilzähne (34) weggelassen ist, um die gewünschte resultierende radiale Kraftkomponente hervorzurufen.

5. Getriebekomponente nach Anspruch 4, dadurch gekennzeichnet, daß hinsichtlich der Umfangsrichtung auf jeder Seite der Öffnungsbereiche der Kanäle (20, 22) wenigstens ein Keilzahn (34) weggelassen ist.

6. Getriebekomponente nach einem der Ansprüche 1 bis 5, dadurch gekennzeichnet, daß die Keilverzahnungen aus in die Welle (12) eingelassenen Keilnuten (26) und an dem ersten Teil (14) angeformten Keilzähnen (28) bestehen.

7. Getriebekomponente nach einem der Ansprüche 1 bis 6, dadurch gekennzeichnet, daß die Welle (12) wenigstens ein drehfestes Zahnrad (16) trägt, wobei für die Drehsicherung die genannten Keilverzahnungen (26) der Welle verwendet werden.

8. Getriebekomponente nach einem der Ansprüche 1 bis 7, dadurch gekennzeichnet, daß ein zweites Teil über die genannten Keilverzahnungen (26) der Welle (12) mit dieser drehfest verbunden sind, wobei auch das zweite Teil einen Kanal aufweist, der mit einem Kanal der Welle kommuniziert, und daß eine Abdichtung der Kanäle durch eine Anordnung von Verzahnungen auf dem Umfang erfolgt, die zu resultierenden radialen Kraftkomponenten führt, welche die Oberflächen des zweiten Teils und der Welle dichtend aufeinander drückt.

9. Getriebekomponente nach einem der Ansprüche 1 bis 8, dadurch gekennzeichnet, daß das erste Teil und/oder das zweite Teil eine Kupplungstrommel (14) enthält, die einen Kupplungskolben (24) aufnimmt, der durch einen in den Kanälen (20, 22) herrschenden Flüssigkeitsdruck betätigbar ist.

## Claims

1. Transmission component with a first member (14) which is mounted on a shaft (12) non-rotatably by at least one group of splines (26, 28), wherein in the first member (14) extends a channel (22) which opens out at a surface (32) of the first member (14) facing towards the shaft (12) and opposite which is a channel (20) of the shaft (12) which opens out at the surface (30) of the shaft (12), characterised in that the design, number and distribution of the splines (26, 28) are selected in such a way that a torque operating between shaft (12) and first member (14) produces a resultant radial force component by which the surface (30) which surrounds the opening region of the shaft channel (20) is pressed onto the surface (32) which surrounds the opening region of the channel (22) of the first member (14), in sealing relationship.

2. Transmission component according to claim 1, characterised in that at least one of the groups of splines (26, 28) comprises at least one flank which is oriented obliquely to the radius vector.

3. Transmission component according to claim 1 or 2, characterised in that the side faces of at least one group of splines (26, 28), which point in the circumferential direction, are aligned with each other in spline fashion.

4. Transmission component according to any of claims 1 to 3, characterised in that the splines (26, 28) are distributed symmetrically over the shaft surface and in that at least one of the male splines (34) is omitted in order to produce the desired resultant radial force component.

5. Transmission component according to claim 4, characterised in that at least one male spline (34) is omitted on each side of the opening regions of the channels (20, 22) with respect to the circumferential direction.

6. Transmission component according to any of claims 1 to 5, characterised in that the splines consist of female splines (26) formed in the shaft (12) and male splines (28) formed on the first member (14).

7. Transmission component according to any of claims 1 to 6, characterised in that the shaft (12) carries at least one non-rotatable gear (16), the said splines (26) of the shaft being used to prevent rotation.

8. Transmission component according to any of claims 1 to 7, characterised in that a second member is non-rotatably connected to the shaft (12) by the said splines (26) of the shaft (12), wherein the second member too comprises a channel which communicates with a channel of the shaft, and in that sealing of the channels takes place by an arrangement of splines on the circumference which leads to resultant radial force components which press the surfaces of the second member and shaft onto each other in sealing relationship.

9. Transmission component according to any of claims 1 to 8, characterised in that the first member and/or the second member includes a clutch drum (14) which receives a clutch piston (24) which can be operated by a liquid pressure prevailing in the channels (20, 22).

## Revendications

1. Composant de transmission, avec un premier élement (14) qui est monté en solidarité de rotation sur un arbre (12) au moyen d'au moins une denture conique (26, 28), un canal (22), qui s'étend dans le premier élément (14), débouchant sur une surface (32) du premier élément (14) tournée vers l'arbre (12) et faisant face à un canal (20) de l'arbre (12) qui débouche sur la surface (30) de l'arbre (12), **caractérisé** en ce que la configuration, le nombre et la répartition des dentures coniques (26, 28) sont choisis de telle sorte qu'un couple de rotation agissant entre l'arbre (12) et le premier élément (14) produit une composante de force radiale résultante par laquelle la surface (30), qui entoure l'embouchure du canal (20) de l'arbre, est pressée en étanchéité sur la surface (32), qui entoure l'embouchure du canal (22) du premier élément (14).

2. Composant de transmission selon la revendication 1, **ca****ractérisé** en ce qu'au moins une des dentures coniques (26, 28) présente au moins un flanc qui est orienté en oblique par rapport au rayon vecteur.

3. Composant de transmission selon la revendication 1 ou 2, **caractérisé** en ce que les faces latérales orientées en direction périphérique d'au moins une denture conique (26, 28) sont coniquement dirigées l'une vers l'autre.

4. Composant de transmission selon l'une quelconque des revendications 1 à 3, **caractérisé** en ce que les dentures coniques (26, 28) sont disposées en répartition symétrique sur la surface de l'arbre, et en ce qu'au moins une des dents coniques (34) est supprimée, afin de produire la composante de force radiale résultante souhaitée.

5. Composant de transmission selon la revendication 4, **ca****ractérisé** en ce qu'au moins une dent conique (34) est supprimée de chaque côté, en direction périphérique, des embouchures des canaux (20, 22).

6. Composant de transmission selon l'une quelconque des revendications 1 à 5, **caractérisé** en ce que les dentures coniques sont constituées par des cannelures (26) pratiquées dans l'arbre (12) et des dents coniques (28) formées sur le premier élément (14).

7. Composant de transmission selon l'une quelconque des revendications 1 à 6, **caractérisé** en ce que l'arbre (12) porte au moins une roue dentée (16) solidaire en rotation, les cannelures précitées (26) de l'arbre étant utilisées pour le blocage en rotation.

8. Composant de transmission selon l'une quelconque des revendications 1 à 7, **caractérisé** en ce qu'un second élément est assemblé en solidarité de rotation à l'arbre (12) par l'intermédiaire des cannelures précitées (26) de ce dernier, le second élément présentant lui aussi un canal communiquant avec un canal de l'arbre, et en ce que l'étanchéité des canaux est réalisée par une disposition de dentures sur la périphérie qui produit des composantes de force radiales résultantes qui pressent en étanchéité l'une sur l'autre les surfaces du second élément et de l'arbre.

9. Composant de transmission selon l'une quelconque des revendications 1 à 8, **caractérisé** en ce que le premier élément et/ou le second élément consiste en un tambour d'embrayage (14) recevant un piston d'embrayage (24), qui peut être actionné par une pression de liquide régnant dans les canaux (20, 22).
